# EUROPEAN PATENT SPECIFICATION

(11) **EP 3 816 511 B1**
(45) Date of publication and mention of the grant of the patent: **21.09.2022**
(21) Application number: 20201902.2
(22) Date of filing: 14.10.2020
(51) Int. Cl.: F23C 3/00, F23C 6/04, F23C 9/00, F23D 14/66, F23L 15/04, F23N 5/02

(54) **RECUPERATIVE GAS BURNER FOR INDUSTRIAL APPLICATIONS AND METHOD FOR OPERATING THE SAME**
REKUPERATIVER GASBRENNER FÜR INDUSTRIELLE ANWENDUNGEN UND VERFAHREN ZUM BETRIEB DAVON
BRÛLEUR À GAZ DE RÉCUPÉRATION POUR APPLICATIONS INDUSTRIELLES ET SON PROCÉDÉ DE FONCTIONNEMENT

(30) Priority: 30.10.2019 US 201916668797
(43) Date of publication of application: 05.05.2021
(73) Proprietor: Honeywell International Inc., Charlotte, NC 28202 (US)
(72) Inventor: GERSUM, Sabine von, Charlotte, NC North Carolina 28202 (US); GITZINGER, Heinz-Peter, Charlotte, NC North Carolina 28202 (US); RUNDE, Sandra, Charlotte, NC North Carolina 28202 (US); SCHRÖDER, Lars, Charlotte, NC North Carolina 28202 (US)
(74) Representative: Houghton, Mark Phillip

(56) References cited:
- EP-A2- 0 903 539
- US-B2- 6 663 380
- CHOI G-M ET AL: "Advanced low NO"x combustion using highly preheated air", ENERGY CONVERSION AND MANAGEMENT, ELSEVIER SCIENCE PUBLISHERS, OXFORD, GB, vol. 42, no. 5, 1 March 2001 (2001-03-01), pages 639-652, XP004236258, ISSN: 0196-8904, DOI: 10.1016/S0196-8904(00)00074-1

## Description

### TECHNICAL FIELD

The invention is related to a recuperative gas burner for industrial applications and to a method for operating such a gas burner.

### BACKGROUND

EP 0 685 683 B1 discloses a recuperative gas burner for industrial applications. The recuperative gas burner disclosed in EP 0 685 683 B1 includes a combustion chamber and a burner tip providing an outlet opening of the combustion chamber. The recuperative gas burner further includes a gas supply having a first gas supply duct and a second gas supply duct. EP 0 903 539 A2, which represents the basis for the two-part form of claim 1, relates to a regenerator burner, in particular for heating furnace chambers of industrial furnaces.

Combustion gas can be provided to the combustion chamber through the first gas supply duct. Combustion gas can be also provided to the burner tip through the second gas supply duct. The recuperative gas burner also includes an air supply through which combustion air can be provided to the combustion chamber. The recuperative gas burner further includes an exhaust gas flow channel through which exhaust gas can be provided to an exhaust gas outlet. The exhaust gas flow channel and the air supply are configured such that the exhaust gas flowing through the exhaust gas flow channel heats the combustion air.

One of the challenges with recuperative gas burners such as the aforementioned recuperative gas burner is reducing NOx emissions, while increasing the efficiency of the recuperative gas burner.

Thus, there is a need for a high efficiency recuperative gas burner with reduced NOx emissions.

### BRIEF SUMMARY

The following summary is provided to facilitate an understanding of some of the features of the disclosed embodiments of the invention and is not intended to be a full description. A full appreciation of the various aspects of the embodiments disclosed herein can be gained by taking the specification, claims, drawings, and abstract as a whole.

It is, therefore, one aspect of the invention to provide for a recuperative gas burner for industrial applications and a method of operating such a recuperative gas burner.

The aforementioned aspects and other objectives can now be achieved as described herein. According to the invention, the recuperative gas burner includes an air supply having an inner air supply chamber with a first inlet for combustion air and an outer air supply chamber with a second, separate inlet for combustion air. The inner air supply chamber of the air supply is configured to provide combustion air to the combustion chamber. The outer air supply chamber of the air supply is configured to provide combustion air to the burner tip.

The outer air supply chamber of the air supply is positioned between the exhaust gas flow channel and the inner air supply chamber of the air supply. The exhaust gas flowing through the exhaust gas channel heats the combustion air which flows through the outer air supply chamber but not or only marginally the combustion air which flows through the inner air supply chamber. Such a recuperative gas burner can be operated with a high efficiency and with reduced NOx emissions in different operation modes.

The outer air supply chamber of the air supply is preferably positioned circumferentially or concentrically around the inner air supply chamber of the air supply. The exhaust gas flow channel is preferably positioned circumferentially or concentrically around the outer air supply chamber of the air supply. The outer supply chamber and the inner air supply chamber are concentrically arranged. Further on, the exhaust gas flow channel is concentrically arranged relative to the air supply chambers. The inner air supply chamber has no contact with the exhaust gas flow channel. The outer air supply chamber, which can be positioned between the exhaust gas flow channel and the inner air supply chamber, has contact with the exhaust gas flow channel. Such a recuperative gas burner can be operated with a high efficiency and with reduced NOx emissions.

The outer air supply chamber has at least one outlet opening positioned circumferentially or concentrically around the outlet opening of the combustion chamber in the region of the burner tip. This at least one outlet opening may be dimensioned to provide a defined portion of between 70% and 90% of the combustion air required at full or maximum burner load above a temperature threshold, preferably above self-ignition temperature of the combustion gas. This allows to further increase efficiency and to further reduce NOx emissions.

The gas supply has a first pipe and a second pipe. The first pipe is positioned circumferentially or concentrically around the second pipe such that an inner gas flow channel provided by the second pipe provides the second gas supply duct. An outer gas flow channel provided between the second pipe and the first pipe provides the first gas supply duct. The inner air supply chamber of the air supply is positioned circumferentially or concentrically around the first pipe of the gas supply. The inner gas flow channel provided by the second pipe has at least one outlet opening at the burner tip positioned within the outlet opening of the combustion chamber. The outer gas flow channel provided between the second pipe and the first pipe has at least one outlet opening for the first gas supply in the combustion chamber. The inner air supply chamber of the air supply has at least one outlet opening in the combustion chamber positioned around the at least one outlet opening of the first gas supply duct. The at least one outlet opening of the first gas supply duct and the at least one outlet opening of the inner air supply chamber both provide an inlet of the combustion chamber. Such a recuperative gas burner can be operated with a high efficiency and with reduced NOx emissions.

According to the invention, the method for operating the recuperative gas burner involves operating in a first operation mode when a process temperature within a process chamber to be heated by the gas burner is below a temperature threshold, preferably below self-ignition temperature of the combustion gas. The recuperative gas burner is in a second operation mode when the process temperature within the process chamber is above the temperature threshold, preferably above self-ignition temperature of the combustion gas. In both operation modes recuperative gas burner can be operated with a high efficiency and with reduced NOx emissions.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a schematic cross section of a recuperative gas burner, in accordance with an embodiment;
FIG. 2 illustrates a recuperative gas burner according to FIG. 1 operated in a first operation mode, in accordance with an embodiment;
FIG. 3 illustrates a recuperative gas burner according to FIG. 1 operated in a first alternative of a second operation mode, in accordance with an embodiment;
FIG. 4 illustrates a recuperative gas burner according to FIG. 1 operated in a second alternative of the second operation mode, in accordance with an embodiment;
FIG. 5 illustrates a diagram showing details of the first operation mode of the recuperative gas burner, in accordance with an embodiment;
FIG. 6 illustrates a diagram showing details of the second alternative of the second operation mode of the recuperative gas burner, in accordance with an embodiment; and
FIG. 7 illustrates a further diagram showing details of the second alternative of the second operation mode of the recuperative gas burner, in accordance with an embodiment.

### DETAILED DESCRIPTION

The particular values and configurations discussed in these nonlimiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

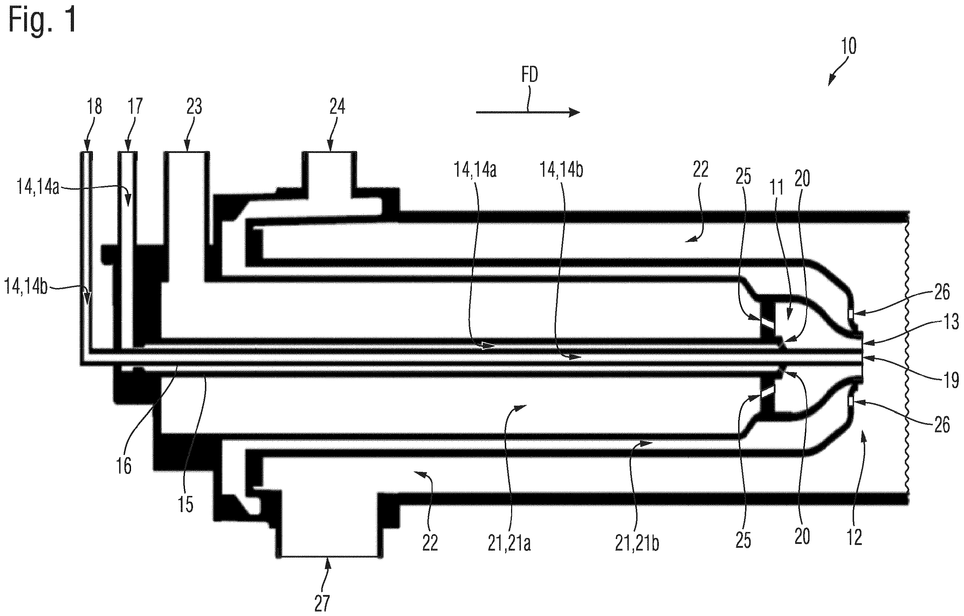

FIG. 1 illustrates a schematic cross section of a recuperative gas burner 10 according to the present invention. The recuperative gas burner 10 comprises a combustion chamber 11. The recuperative gas burner 10 further comprises a burner tip 12 providing an outlet opening 13 of the combustion chamber 11. The recuperative gas burner 10 further comprises further a gas supply 14 having a first gas supply duct 14a and a second gas supply duct 14b. Combustion gas can be provided to the combustion chamber 11 through first gas supply duct 14a. Combustion gas can be provided to the burner tip 12 through second gas supply duct 14b.

The gas supply 14 has a first pipe 15 and a second pipe 16.The first pipe 15 is positioned circumferentially or concentrically around the second pipe 16. An inner gas flow channel can be provided by the second pipe 16, which can provide the second gas supply duct 14b. An outer flow channel can be provided between the second pipe 16 and the first pipe 15 provides the first gas supply duct 14a.

The first gas supply duct 14a and the second gas supply duct 14b each have an own, separate gas inlet, namely the gas supply duct 14a a first gas inlet 17 and the second gas supply duct 14b a second gas inlet 18.

The inner gas flow channel provided by the second pipe 16 and thereby the second gas supply duct 14b has at least one outlet opening 19, preferably one outlet opening 19, at the burner tip 12 positioned within the outlet opening 13 of the combustion chamber 11. The gas flowing through the second gas supply duct 14b is not provided into the combustion chamber 11 but downstream of the combustion chamber 11. Seen in axial flow direction FD of the gas, the outlet opening 13 of combustion chamber 11 and the outlet opening 19 of the second gas supply duct 14b are at the same axial position of the burner tip 12. Alternatively, there may be a slight axial offset between the same.

The outer gas flow channel provided between the second pipe 16 and the first pipe 15 and thereby the first gas supply duct 14a has at least one outlet opening 20, preferably a plurality of openings 20, providing the gas into the combustion chamber 11. Seen in axial flow direction FD of the gas, the outlet openings 20 of the first gas supply duct 14a are positioned upstream of the outlet opening 19 of the second gas supply duct 14b.

The recuperative gas burner 10 further comprises further an air supply 21 and an exhaust gas flow channel 22. The air supply 21 has an inner air supply chamber 21a with a first air inlet 23 for combustion air. The air supply 21 has further an outer air supply chamber 21b with a second, separate air inlet 24 for combustion air.

The inner air supply chamber 21a can be configured to provide combustion air into the combustion chamber 11. The inner air supply chamber 21a of the air supply 21 has at least one outlet opening 25, preferably a plurality of outlet openings 25 positioned circumferentially or concentrically around the outlet openings 20 of the first gas supply duct 14a. Seen in axial flow direction FD of the gas, the outlet openings 25 of the inner air supply chamber 21a providing the combustion air into the combustion chamber 11 are positioned slightly axially offset, namely upstream, of the outlet openings 20 of the first gas supply duct 14a providing the gas into the combustion chamber 11. However, the outlet openings 25 and the outlet openings 20 may be at the same axial position.

The outer air supply chamber 21b can be configured to provide combustion air to the burner tip 12. The outer air supply chamber 21b of the air supply 21 has at least one outlet opening 26, preferably a plurality of outlet openings 26, positioned circumferentially or concentrically around the outlet opening 13 of the combustion chamber 11.

Seen in axial flow direction FD of the gas, the outlet openings 26 of the outer air supply chamber 21b providing the combustion air to the burner tip 12 are positioned slightly axially offset, namely upstream, of the outlet opening 13 of the combustion chamber 11. However, the outlet openings 26 and the outlet opening 13 may be at the same axial position.

The outer air supply chamber 21b is positioned between the exhaust gas flow channel 22 and the inner air supply chamber 21a. The outer air supply chamber 21b of the air supply 21 is positioned circumferentially or concentrically around the inner air supply chamber 21a of the air supply 21.

The exhaust gas flow channel 22 can be positioned circumferentially or concentrically around the outer air supply chamber 21b of the air supply 21. The inner air supply chamber 21a has no contact with the exhaust gas flow channel 22. The outer air supply chamber 21b, which can be positioned between the exhaust gas flow channel 22 and the inner air supply chamber 21a, has contact with the exhaust gas flow channel 22.

The exhaust gas flowing through the exhaust gas channel 22 heats the combustion air which flows through the outer air supply chamber 21b but not or only marginally the combustion air which flows through the inner air supply chamber 21a. Such a recuperative gas burner can be operated with a high efficiency and with reduced NOx emissions at different operation modes.

The exhaust gas flowing through the exhaust gas channel 22 emerges from the exhaust gas channel 22 through an exhaust gas opening 27 of the same.

The outlet openings 26 of the outer air supply chamber 21 may be dimensioned to provide a defined portion of between 70% and 90% of the combustion air required at full or maximum burner load above a temperature threshold, preferably above self-ignition temperature of the combustion gas. This is of advantage in specific operation mode of the gas burner that will be described below in greater detail.

The above described recuperative gas burner 10 can be operated in a first operation mode and a second operation mode. The recuperative gas burner 10 can be operated in the first operation mode when a process temperature within a process chamber (not shown) to be heated by the recuperative gas burner 10 is below a temperature threshold, preferably below a self-ignition temperature of the combustion gas.

The recuperative gas burner 10 can be operated in the second operation mode when the process temperature within the process chamber to be heated by the recuperative gas burner 10 is above the temperature threshold, preferably above the self-ignition temperature of the combustion gas.

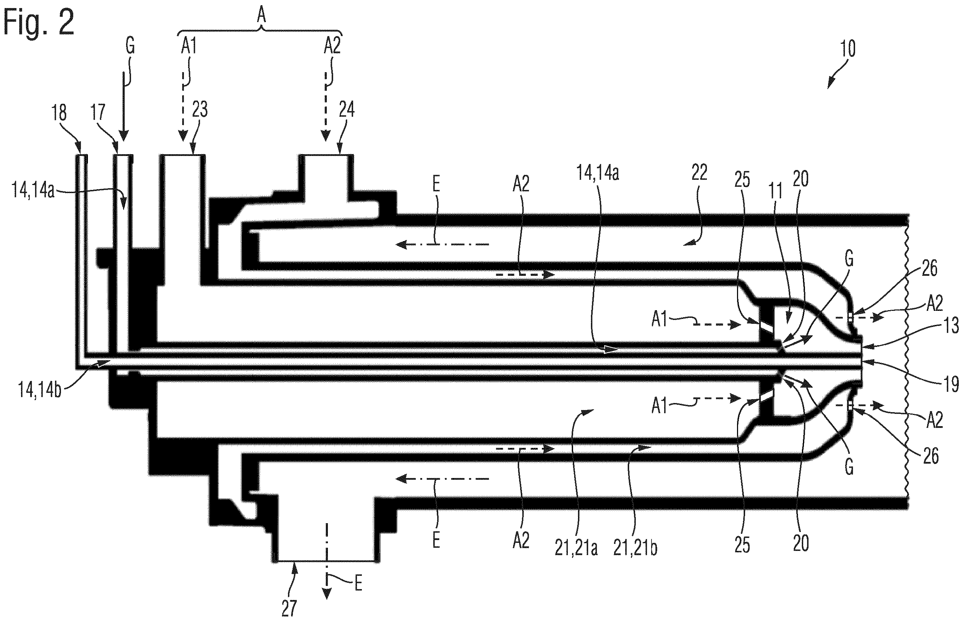

When the recuperative gas burner 10 is operated in the first operation mode (see Figure 2), combustion gas is merely provided to the combustion chamber 11 through the first gas supply duct 14a. In the first operation mode, the gas inlet 18 of the second gas supply duct 14b is closed and the gas inlet 17 of the first gas supply duct 14a is opened. Gas G can only be provided to the combustion chamber 11 though the outlet openings 20 of the first gas supply duct 14a.

In the first operation mode, a first portion A1 of the combustion air A is provided to the combustion chamber 11 through the inner air supply chamber 21a and a second portion A2 of the combustion air A is provided to the burner tip 12 through the outer air supply chamber 21b. The first portion A1 of the combustion air A enters into the combustion chamber 11 through the outlet openings 25 of the inner air supply chamber 21a. The second portion A2 of the combustion air A emerges out of the outer air supply chamber 21b through the outlet openings 26 of the outer air supply chamber 21b in the region of the burner tip 12.

In the first operation mode, which can also be called flame mode or visible flame mode, a primary combustion of the gas take place within the combustion chamber 11 using the first portion A1 of the combustion air A and a secondary combustion of the gas take place downstream the combustion chamber 11 using the second portion A2 of the combustion air A.

A flame ignition rod (not shown) is positioned with the combustion chamber 11 to ignite the gas/air mixture within the combustion chamber 11.

The first portion A1 of the combustion air flowing through the inner air supply chamber 21a stays relatively cool. This relatively cool combustion air A1 is mixed with the gas G within the combustion chamber 11. The flame ignition rod ignites the mixture. The second portion A2 of the combustion air flowing through the outer air supply chamber 21b is becomes heated by the exhaust gas E. The second portion A2 of the combustion air is relatively hot and is mixed with gas G not being burned within the combustion chamber 11 and with products of combustion like CO.

For process temperatures below the temperature threshold, preferably below the self-ignition temperature of the combustion gas, the first operation mode allows to reduce NOx emissions while providing a high efficiency.

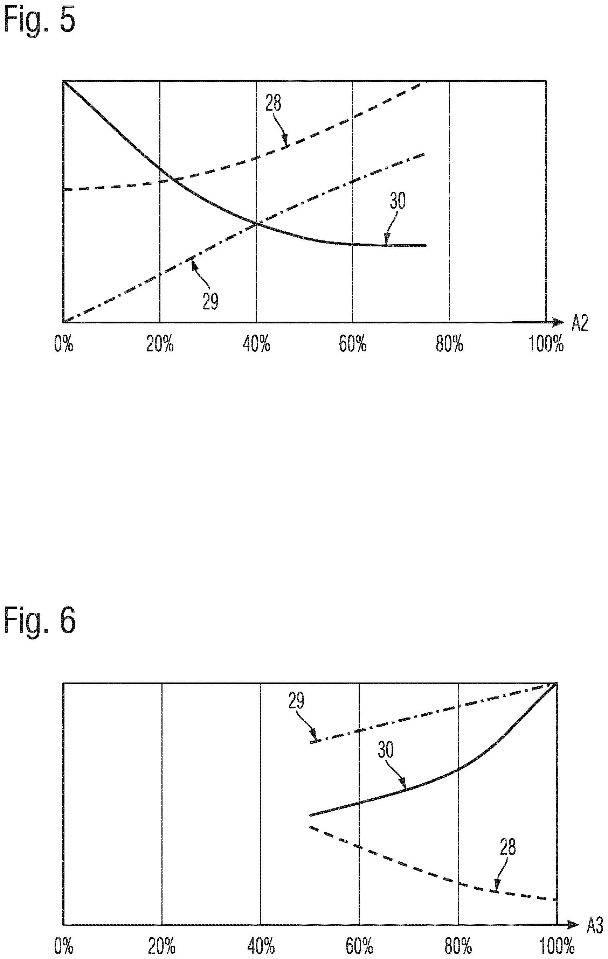

FIG. 5 illustrates a diagram for the first operation mode in which a first curve illustrates NOx emissions 28, a second curve illustrates the efficiency 29 and a third curve illustrates an air pressure 30 of the combustion air supply 21, all as a function of the second portion A2 of the combustion air. As can be seen in FIG. 5, a relative low second portion A2 of combustion air would reduce NOx emissions 28 but would reduce efficiency 29. A relative high second portion A2 of combustion air would increase NOx emissions 28 but would increase efficiency 29. To provide both low NOx emissions 28 and a high efficiency 29 in the first operation mode, the share of the second portion A2 of combustion air in the entire combustion air A=A1+A2 used for the first operation mode ranges between 30% und 70%, preferably between 40% und 70%, most preferably between 40% und 60%.

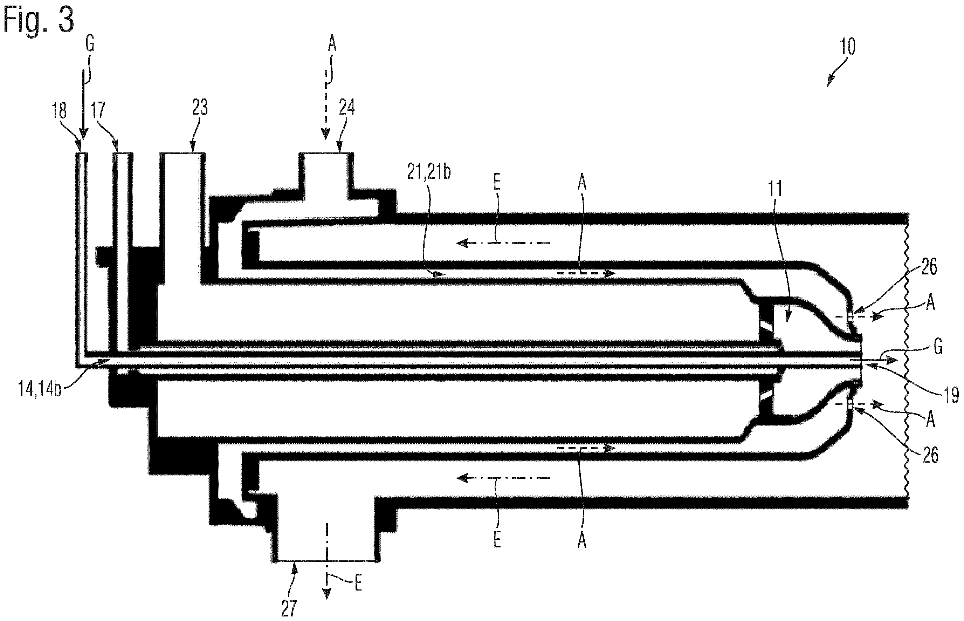

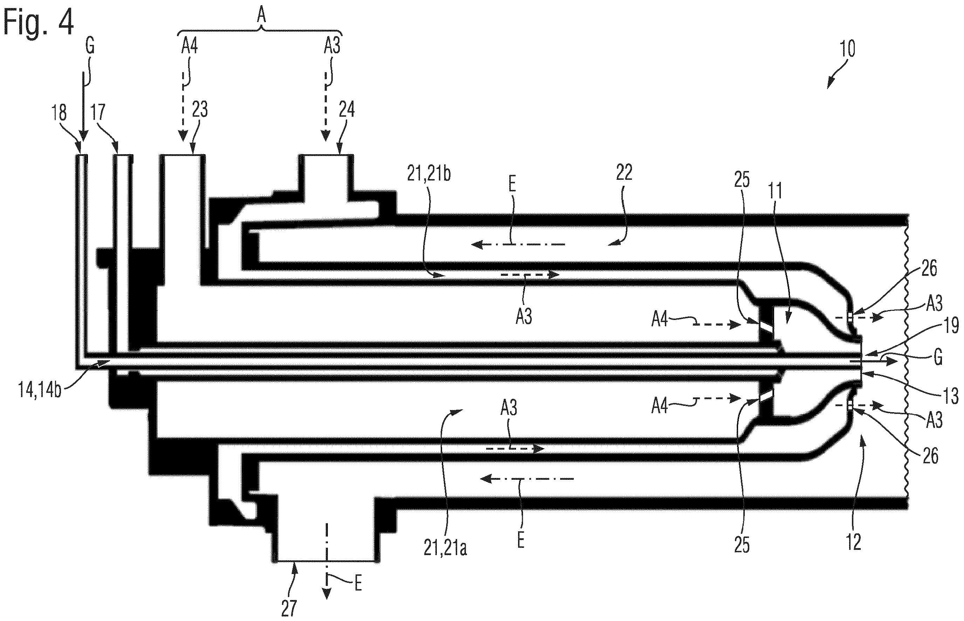

When the recuperative gas burner 10 is operated in the second operation mode (e.g., see FIG. 3 and FIG. 4), the combustion gas G is merely provided to the burner tip 12 through the second gas supply duct 14b.

In the second operation mode, the gas inlet 18 of the second gas supply duct 14b is opened and the gas inlet 17 of the first gas supply duct 14a is closed. Gas G can only be provided to the burner tip 12 though the outlet opening 19 of the second gas supply duct 14b.

In the second operation mode, either a major portion A3 of the combustion air A or the entire combustion air A is provided to the burner tip 12 through the outer air supply chamber 21b. In FIG. 3, the entire combustion air (100% of the combustion air) is provided to the burner tip 12 through the outer air supply chamber 21b. In FIG. 4 a major portion A3 of the combustion air being smaller than 100% but larger than the second portion A2 in the first operation mode is provided to the burner tip 12 through the outer air supply chamber 21b.

In the second operation mode, either a minor portion A4 of the combustion air A or no combustion air is provided to the combustion chamber 11 through the inner air supply chamber 21a. In FIG. 3, the no combustion air (0% of the combustion air) is provided to the combustion chamber 11 through the inner air supply chamber 21a. In FIG. 4, a minor portion A4 of the combustion air being greater than 0% but smaller than the first portion A1 in the first operation mode is provided to the combustion chamber 11 through the inner air supply chamber 21a.

In the second operation mode, which can also be called flameless mode or invisible flame mode, the entire combustion of the gas takes place downstream the combustion chamber 11. The combustion air flowing through the outer air supply chamber 21b becomes heated by the exhaust gas E.

FIG. 6 illustrates a diagram for the second operation mode according to FIG. 4 in which a first curve illustrates NOx emissions 28, a second curve illustrates the efficiency 29 and a third curve illustrates an air pressure 30, all as a function of the major portion A3 of the combustion air. As can be seen in FIG. 6, a relative low major portion A3 of the combustion air reduces the air pressure 30, but will lead to a reduced efficiency 29 and increased NOx emissions 28. A relative high major portion A3 of the combustion would, if no limitation of air pressure 30 would exist, lead to a high efficiency 29 and reduced NOx emissions 28. However, the air pressure 30 is limited.

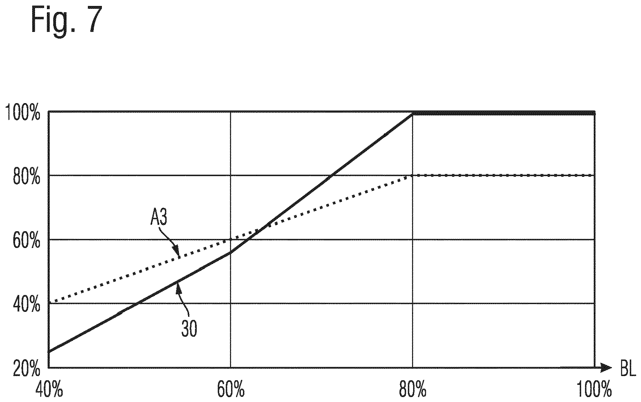

FIG. 7 illustrates a diagram for the second operation mode according to FIG. 4 in which a first curve illustrates the air pressure 30 and a second curve illustrates the major portion A3, all as a function of burner load BL. FIG. 7 is valid for a gas burner 10 having outlet openings 26 of the outer air supply chamber 21b which are dimensioned to provide 80% of the combustion air required at full or maximum burner load above the temperature threshold, preferably above the self-ignition temperature of the combustion gas. At full or maximum burner load (100% burner load), the major portion A3 of the combustion air is 80% and the minor portion A4 is 20%.

When operating the gas burner 10 in the second operation mode at partial burner load between 80% und 100%, the major portion A3 of the combustion stays constant and the minor portion A4 is adapted, e.g. at 80% burner load only the outer air flow channel 21b provides combustion air.

At burner loads below 80%, the amount of the major portion A3 flowing through the outer air flow channel 21b is decreased by reducing the air pressure 30 which results in a reduced velocity of the air flowing through the openings 26. Between 80% und 100% burner load the velocity of the air flowing through the openings 26 remains constant. This is of advantage to keep NOx emissions low.

For process temperatures above the temperature threshold, preferably above the self-ignition temperature of the combustion gas, the second operation mode allows to reduce NOx emissions while providing a high efficiency.

As mentioned above, the recuperative gas burner 10 is operated in the first operation mode when a process temperature within a process chamber to be heated by the recuperative gas burner 10 is below the temperature threshold, preferably below the self-ignition temperature of the combustion gas, and the recuperative gas burner 10 is operated in the second operation mode when the process temperature within the process chamber to be heated by the recuperative gas burner 10 is above the temperature threshold, preferably above the self-ignition temperature of the combustion gas.

When the recuperative gas burner 10 is operated in the first operation mode and the temperature within the process chamber to be heated by the recuperative gas burner 10 becomes greater than the temperature threshold, preferably greater than the self-ignition temperature of the combustion gas, the recuperative gas burner 10 is automatically switched from the first operation mode to the second operation mode. In this case the gas inlet 17 which is opened in the first operation mode becomes closed and the gas inlet 18 which is closed in the first operation mode becomes opened. Further on, in this case the first air inlet 23 may become closed (see FIG. 3) or the amount of air provided through the inner air chamber 21a may become reduced. The flame ignition rod (not shown) being positioned with the combustion chamber 11 may than be deactivated.

When the recuperative gas burner 10 is operated in the second operation mode and the temperature within the process chamber to be heated by the recuperative gas burner 10 becomes smaller than the temperature threshold, preferably smaller than the self-ignition temperature of the combustion gas, the recuperative gas burner 10 is automatically switched from the second operation mode to the first operation mode. In this case the gas inlet 18 which is opened in the second operation mode becomes closed and gas inlet 17 which is closed in the second operation mode becomes opened. Further on, in this case the first air inlet 23 may become opened or the amount of air provided through the inner air chamber 21a may become increased. The flame ignition rod (not shown) being positioned with the combustion chamber 11 may than be activated.

There may be a hysteresis for switching the recuperative gas burner 10 between the above two operation modes. The disclosed embodiments can also include a recuperative gas burner 10 with two concentrically air supply chambers 21a, 21b, the inner air supply chamber 21a without contact to the exhaust gas channel 22 and the outer air supply chamber 21b with contact to the to the exhaust gas channel 22.

The recuperative gas burner 10 can be operated in two operation modes, in a first mode preferably below the self-ignition temperature in first mode and in a second mode preferably above the self-ignition temperature in the second mode.

In the first mode, lowest NOx-emissions can be realized by air staging close to stability limits. In the first mode most preferably about 40-60% of the combustion air - the first air portion A1 of the combustion air - passes the inner air supply chamber 21a and stays cool resulting in a large reduction of NOx. The remaining air - the second air portion A2 of the combustion air - can be heated while passing the outer air supply chamber 21b. In balancing the ratio of cold air provided by the inner air supply chamber 21a to the combustion chamber 11 and heated air provided by the outer air supply chamber 21b to the burner tip 12, NOx emissions can be minimized in first mode.

Above the self-ignition temperature, the recuperative gas burner 10 can be switched to the second mode. In the second mode gas can flow through the second gas supply duct 14b to the burner tip 12, simultaneously the air flowing through the outer air supply chamber 21b will be increased. The combustion air provided through the inner air chamber 21a may be reduced to 0% and the combustion air provided through the outer air chamber 21b may be increased to 100%. Due to the high speed of the combustion air, the same may be mixed with and diluted by exhaust gas downstream of the burner tip 12 and react further downstream in combustion with minimum NOx in the second mode.

The recuperative gas burner according to the present disclosure allows to almost freely select the ratio between the major portion A3 and the minor air portion in the second operation mode and to almost freely select the ratio between first portion A1 and the second air portion A2 in the first operation mode to meet customer needs of NOx emissions, air pressure and efficiency.

Thus, based on the foregoing, it can be appreciated that a recuperative gas burner for industrial applications can be implemented. The gas burner comprises a combustion chamber 11 and can include a burner tip 12 providing an outlet opening 13 of the combustion chamber 11. The gas burner can include a gas supply 14 for combustion gas having a first gas supply duct 14a and a second gas supply duct 14b. The combustion gas can be provided to the combustion chamber 11 through the first gas supply duct 14a, and wherein combustion gas can be provided to the burner tip 12 through the second gas supply duct 14b.

The gas burner can include an air supply 21 for combustion air and an exhaust gas flow channel 22 for exhaust gas, wherein the exhaust gas flow channel 22 and the air supply 21 can be configured such that combustion air can be heated by the exhaust gas. The air supply 21 also includes an inner air supply chamber 21a with a first inlet 23 for combustion air. The inner air supply chamber 21a can be configured to provide combustion air to the combustion chamber 11. The air supply 21 can include an outer air supply chamber 21b with a second, separate inlet 24 for combustion air. The outer air supply chamber 21b can be configured to provide combustion air to the burner tip 12, and the outer air supply chamber 21b can be positioned between the exhaust gas flow channel 22 and the inner air supply chamber 21a.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

### List of Reference Numerals

- 10: gas burner
- 11: combustion chamber
- 12: burner tip
- 13: outlet opening
- 14: gas supply
- 14a: first gas supply duct
- 14b: second gas supply duct
- 15: first pipe
- 16: second pipe
- 17: gas inlet
- 18: gas inlet
- 19: gas outlet opening
- 20: gas outlet opening
- 21: air supply
- 21a: inner air supply chamber
- 21b: outer air supply chamber
- 22: exhaust gas flow channel
- 23: air inlet
- 24: air inlet
- 25: outlet opening
- 26: outlet opening
- 27: exhaust gas opening
- 28: NOx emissions
- 29: efficiency
- 30: air pressure

## Claims

1. A recuperative gas burner (10), comprising
a combustion chamber (11);
a burner tip (12) providing an outlet opening (13) of the combustion chamber;
a gas supply (14) for combustion gas having a first gas supply duct (14a) and a second gas supply duct (14b), wherein the combustion gas is provided to the combustion chamber through the first gas supply duct, wherein the combustion gas is provided to the burner tip through the second gas supply duct;
an air supply (21) for combustion air;
an exhaust gas flow channel (22) for exhaust gas, wherein the exhaust gas flow channel and the air supply are configured such that the combustion air is heated by the exhaust gas, wherein the air supply comprises an inner air supply chamber (21a) with a first inlet (23) for the combustion air, wherein the inner air supply chamber is configured to provide the combustion air to the combustion chamber;
**characterised in that** the air supply comprises
an outer air supply chamber (21b) with a second, separate inlet (24) for the combustion air, wherein the outer air supply chamber is configured to provide the combustion air to the burner tip, wherein the outer air supply chamber is positioned between the exhaust gas flow channel and the inner air supply chamber.

2. The recuperative gas burner of claim 1, wherein:
the outer air supply chamber of the air supply is positioned circumferentially or concentrically around the inner air supply chamber of the air supply; and
the exhaust gas flow channel is positioned circumferentially or concentrically around the outer air supply chamber of the air supply.

3. The recuperative gas burner of claim 1, wherein the outer air supply chamber of the air supply comprises at least one outlet opening (26) positioned circumferentially or concentrically around the outlet opening of the combustion chamber.

4. The recuperative gas burner of claim 3, wherein the at least one outlet opening of the outer air supply chamber is dimensioned to provide a defined portion of between 70% and 90% of the combustion air required at full or maximum burner load above a temperature threshold of a temperature within a process chamber.

5. The recuperative gas burner of claim 2 wherein:
the gas supply comprises a first pipe (15) and a second pipe (16),
the first pipe is positioned circumferentially or concentrically around the second pipe such that an inner gas flow channel provided by the second pipe provides the second gas supply duct and an outer gas flow channel provided between the second pipe and the first pipe provides the first gas supply duct; and
the inner air supply chamber of the air supply is positioned circumferentially or concentrically around the first pipe of the gas supply.

6. The recuperative gas burner of claim 5, wherein the inner gas flow channel provided by the second pipe comprises at least one outlet opening (19) positioned within the outlet opening of the combustion chamber.

7. The recuperative gas burner of claim 5, wherein:
the outer gas flow channel provided between the second pipe and the first pipe comprises at least one outlet opening (20) for the first gas supply duct to provide gas into the combustion chamber;
the inner air supply chamber of the air supply comprises at least one outlet opening (25) providing air into the combustion chamber positioned around the at least one outlet opening of the first gas supply duct;
the at least one outlet opening (20) of the first gas supply duct and the at least one outlet opening (25) of the inner air supply chamber both provide an inlet of the combustion chamber.

8. A method for operating a recuperative gas burner (10), comprising:
providing combustion gas to a combustion chamber (11) through a first gas supply duct (14a);
providing the combustion gas to a burner tip (12) through a second gas supply duct (14b);
providing an air supply for combustion air through an inner air supply chamber (21a) having a first inlet (23)
for the combustion air, wherein the inner air supply chamber is configured to provide the combustion air to the combustion chamber;
heating the combustion air by an exhaust gas, wherein the exhaust gas comprises an exhaust gas flow channel (22);
providing the air supply for the combustion air through an outer air supply chamber (21b) having a second, separate inlet (24) for the combustion air, wherein the outer air supply chamber is positioned between the exhaust gas flow channel and the inner air supply chamber configured to provide the combustion air to the burner tip;
operating the recuperative gas burner in a first operation mode when a process temperature within a process chamber is below a temperature threshold;
operating the recuperative gas burner in a second operation mode when the process temperature within the process chamber is above the temperature threshold, preferably above self-ignition temperature of the combustion gas.

9. The method of claim 8 wherein when the recuperative gas burner is operated in the first operation mode:
the combustion gas is provided to the combustion chamber through the first gas supply duct;
a first portion of the combustion air is provided to the combustion chamber through the inner air supply chamber; and
a second portion of the combustion air is provided to the burner tip through the outer air supply chamber.

10. The method of claim 8 wherein when the recuperative gas burner is operated in the second operation mode:
the combustion gas is provided to the burner tip through the second gas supply duct;
a major portion of the combustion air is provided to the burner tip through the outer air supply chamber, wherein the major portion of the second mode is larger than the second portion of the first operation mode, a minor portion of the combustion air is provided to the combustion chamber through the inner air supply chamber, and the minor portion of the second mode is smaller than the first portion of the first operation mode.

11. The method of claim 8 wherein when the recuperative gas burner is operated in the second operation mode:
the combustion gas is provided to the burner tip through the second gas supply duct; and
the combustion air is provided to the burner tip through the outer air supply chamber.

## Patentansprüche

1. Rekuperativer Gasbrenner (10), umfassend
eine Brennkammer (11);
eine Brennerspitze (12), die eine Auslassöffnung (13) der Brennkammer bereitstellt;
eine Gaszufuhr (14) für Verbrennungsgas, die eine erste Gaszufuhrleitung (14a) und eine zweite Gaszufuhrleitung (14b) aufweist,
wobei das Verbrennungsgas für die Brennkammer durch die erste Gaszufuhrleitung bereitgestellt wird, wobei das Verbrennungsgas für die Brennerspitze durch die zweite Gaszufuhrleitung bereitgestellt wird;
eine Luftzufuhr (21) für Verbrennungsluft;
einen Abgasströmungskanal (22) für Abgas, wobei der Abgasströmungskanal und die Luftzufuhr so konfiguriert sind, dass die Verbrennungsluft durch das Abgas erwärmt wird, wobei die Luftzufuhr eine innere Luftzufuhrkammer (21a) mit einem ersten Einlass (23) für die Verbrennungsluft umfasst, wobei die innere Luftzufuhrkammer so konfiguriert ist, dass sie die Verbrennungsluft für die Brennkammer bereitstellt;
**dadurch gekennzeichnet, dass** die Luftzufuhr eine äußere Luftzufuhrkammer (21b) mit einem zweiten, separaten Einlass (24) für die Verbrennungsluft umfasst, wobei die äußere Luftzufuhrkammer so konfiguriert ist, dass sie die Verbrennungsluft für die Brennerspitze bereitstellt, wobei die äußere Luftzufuhrkammer zwischen dem Abgasströmungskanal und der inneren Luftzufuhrkammer angeordnet ist.

2. Rekuperativer Gasbrenner nach Anspruch 1, wobei:
die äußere Luftzufuhrkammer der Luftzufuhr in Umfangsrichtung oder konzentrisch um die innere Luftzufuhrkammer der Luftzufuhr angeordnet ist; und
der Abgasströmungskanal in Umfangsrichtung oder konzentrisch um die äußere Luftzufuhrkammer der Luftzufuhr angeordnet ist.

3. Rekuperativer Gasbrenner nach Anspruch 1, wobei die äußere Luftzufuhrkammer der Luftzufuhr mindestens eine Auslassöffnung (26) umfasst, die in Umfangsrichtung oder konzentrisch um die Auslassöffnung der Brennkammer angeordnet ist.

4. Rekuperativer Gasbrenner nach Anspruch 3, wobei die mindestens eine Auslassöffnung der äußeren Luftzufuhrkammer so dimensioniert ist, dass sie einen definierten Abschnitt von 70 % bis 90 % der Verbrennungsluft bereitstellt, die bei voller oder maximaler Last des Brenners oberhalb eines Temperaturschwellenwerts einer Temperatur innerhalb einer Prozesskammer erforderlich ist.

5. Rekuperativer Gasbrenner nach Anspruch 2, wobei:
die Gaszufuhr ein erstes Rohr (15) und ein zweites Rohr (16) umfasst,
das erste Rohr in Umfangsrichtung oder konzentrisch um das zweite Rohr herum angeordnet ist, sodass ein innerer Gasströmungskanal, der von dem zweiten Rohr bereitgestellt wird, die zweite Gaszufuhrleitung bereitstellt und ein äußerer Gasströmungskanal, der zwischen dem zweiten Rohr und dem ersten Rohr bereitgestellt wird, die erste Gaszufuhrleitung bereitstellt; und
die innere Luftzufuhrkammer der Gaszufuhr in Umfangsrichtung oder konzentrisch um das erste Rohr der Gaszufuhr angeordnet ist.

6. Rekuperativer Gasbrenner nach Anspruch 5, wobei der von dem zweiten Rohr bereitgestellte innere Gasströmungskanal mindestens eine Auslassöffnung (19) umfasst, die innerhalb der Auslassöffnung der Brennkammer angeordnet ist.

7. Rekuperativer Gasbrenner nach Anspruch 5, wobei:
der äußere Gasströmungskanal, der zwischen dem zweiten Rohr und dem ersten Rohr bereitgestellt wird, mindestens eine Auslassöffnung (20) für die erste Gaszufuhrleitung umfasst, um Gas in die Brennkammer bereitzustellen;
die innere Luftzufuhrkammer der Luftzufuhr mindestens eine Auslassöffnung (25) umfasst, die Luft in die Brennkammer bereitstellt, die um die mindestens eine Auslassöffnung der ersten Gaszufuhrleitung herum angeordnet ist;
die mindestens eine Auslassöffnung (20) der ersten Gaszufuhrleitung und die mindestens eine Auslassöffnung (25) der inneren Luftzufuhrkammer beide einen Einlass der Brennkammer bereitstellen.

8. Verfahren zum Betrieb eines rekuperativen Gasbrenners (10), umfassend:
Bereitstellen von Verbrennungsgas für eine Brennkammer (11) durch eine erste Gaszufuhrleitung (14a);
Bereitstellen des Verbrennungsgases für eine Brennerspitze (12) durch eine zweite Gaszufuhrleitung (14b);
Bereitstellen einer Luftzufuhr für Verbrennungsluft durch eine innere Luftzufuhrkammer (21a), die einen ersten Einlass (23) für die Verbrennungsluft aufweist, wobei die innere Luftzufuhrkammer so konfiguriert ist, dass sie die Verbrennungsluft für die Brennkammer bereitstellt;
Erhitzen der Verbrennungsluft durch ein Abgas, wobei das Abgas einen Abgasströmungskanal (22) umfasst;
Bereitstellen der Luftzufuhr für die Verbrennungsluft durch eine äußere Luftzufuhrkammer (21b), die einen zweiten, separaten Einlass (24) für die Verbrennungsluft aufweist, wobei die äußere Luftzufuhrkammer zwischen dem Abgasströmungskanal und der inneren Luftzufuhrkammer angeordnet ist, die so konfiguriert ist, dass sie die Verbrennungsluft für die Brennerspitze bereitstellt;
Betreiben des rekuperativen Gasbrenners in einem ersten Betriebsmodus, wenn die Prozesstemperatur in der Prozesskammer unter einem Temperaturschwellenwert liegt;
Betreiben des rekuperativen Gasbrenners in einem zweiten Betriebsmodus, wenn die Prozesstemperatur in der Prozesskammer über dem Temperaturschwellenwert liegt, vorzugsweise über der Selbstentzündungstemperatur des Verbrennungsgases.

9. Verfahren nach Anspruch 8, wobei, wenn der rekuperative Gasbrenner im ersten Betriebsmodus betrieben wird:
das Verbrennungsgas durch die erste Gaszufuhrleitung für die Brennkammer bereitgestellt wird;
ein erster Teil der Verbrennungsluft für die Brennkammer durch die innere Luftzufuhrkammer bereitgestellt wird; und
ein zweiter Teil der Verbrennungsluft für die Brennerspitze durch die äußere Luftzufuhrkammer bereitgestellt wird.

10. Verfahren nach Anspruch 8, wobei, wenn der rekuperative Gasbrenner im zweiten Betriebsmodus betrieben wird:
das Verbrennungsgas durch die zweite Gaszufuhrleitung für die Brennerspitze bereitgestellt wird;
ein größerer Teil der Verbrennungsluft für die Brennerspitze durch die äußere Luftzufuhrkammer bereitgestellt wird, wobei der größere Teil des zweiten Modus größer ist als der zweite Teil des ersten Betriebsmodus, ein kleinerer Teil der Verbrennungsluft für die Brennkammer durch die innere Luftzufuhrkammer bereitgestellt wird und der kleinere Teil des zweiten Modus kleiner ist als der erste Teil des ersten Betriebsmodus.

11. Verfahren nach Anspruch 8, wobei, wenn der rekuperative Gasbrenner im zweiten Betriebsmodus betrieben wird:
das Verbrennungsgas durch die zweite Gaszufuhrleitung für die Brennerspitze bereitgestellt wird; und
die Verbrennungsluft für die Brennerspitze durch die äußere Luftzufuhrkammer bereitgestellt wird.

## Revendications

1. Brûleur à gaz de récupération (10), comprenant
une chambre de combustion (11) ;
une pointe de brûleur (12) fournissant une ouverture de sortie (13) de la chambre de combustion ;
une alimentation en gaz (14) pour gaz de combustion ayant un premier conduit d'alimentation en gaz (14a) et un second conduit d'alimentation en gaz (14b),
dans lequel le gaz de combustion est fourni à la chambre de combustion à travers le premier conduit d'alimentation en gaz, dans lequel le gaz de combustion est fourni à la pointe de brûleur à travers le second conduit d'alimentation en gaz ;
une alimentation en air (21) pour l'air de combustion ;
un canal d'écoulement des gaz d'échappement (22) pour les gaz d'échappement, dans lequel le canal d'écoulement des gaz d'échappement et l'alimentation en air sont conçus de telle sorte que l'air de combustion est chauffé par les gaz d'échappement, dans lequel l'alimentation en air comprend une chambre d'alimentation en air interne (21a) avec une première entrée (23) pour l'air de combustion, dans lequel la chambre d'alimentation en air interne est conçue pour fournir l'air de combustion à la chambre de combustion ;
**caractérisé en ce que** l'alimentation en air comprend une chambre d'alimentation en air externe (21b) avec une seconde entrée séparée (24) pour l'air de combustion, dans lequel la chambre d'alimentation en air externe est conçue pour fournir l'air de combustion à la pointe de brûleur, dans lequel la chambre d'alimentation en air externe est positionnée entre le canal d'écoulement des gaz d'échappement et la chambre d'alimentation en air interne.

2. Brûleur à gaz de récupération selon la revendication 1, dans lequel :
la chambre d'alimentation en air externe de l'alimentation en air est positionnée circonférentiellement ou concentriquement autour de la chambre d'alimentation en air interne de l'alimentation en air ; et
le canal d'écoulement des gaz d'échappement est positionné circonférentiellement ou concentriquement autour de la chambre d'alimentation en air externe de l'alimentation en air.

3. Brûleur à gaz de récupération selon la revendication 1, dans lequel la chambre d'alimentation en air externe de l'alimentation en air comprend au moins une ouverture de sortie (26) positionnée circonférentiellement ou concentriquement autour de l'ouverture de sortie de la chambre de combustion.

4. Brûleur à gaz de récupération selon la revendication 3, dans lequel l'au moins une ouverture de sortie de la chambre d'alimentation en air externe est dimensionnée pour fournir une partie définie comprise entre 70 % et 90 % de l'air de combustion requis à pleine charge ou à charge maximale du brûleur au-dessus d'un seuil de température d'une température dans une chambre de traitement.

5. Brûleur à gaz de récupération selon la revendication 2, dans lequel :
l'alimentation en gaz comprend un premier tuyau (15) et un second tuyau (16),
le premier tuyau est positionné circonférentiellement ou concentriquement autour du second tuyau de telle sorte qu'un canal d'écoulement de gaz interne prévu par le second tuyau fournit le second conduit d'alimentation en gaz et qu'un canal d'écoulement de gaz externe prévus entre le second tuyau et le premier tuyau fournit le premier conduit d'alimentation en gaz ; et
la chambre d'alimentation en air interne de l'alimentation en air est positionnée circonférentiellement ou concentriquement autour du premier tuyau d'alimentation en gaz.

6. Brûleur à gaz de récupération selon la revendication 5, dans lequel le canal d'écoulement de gaz interne fourni par le second tuyau comprend au moins une ouverture de sortie (19) positionnée à l'intérieur de l'ouverture de sortie de la chambre de combustion.

7. Brûleur à gaz de récupération selon la revendication 5, dans lequel :
le canal d'écoulement de gaz externe prévu entre le second tuyau et le premier tuyau comprend au moins une ouverture de sortie (20) pour le premier conduit d'alimentation en gaz pour fournir du gaz dans la chambre de combustion ;
la chambre d'alimentation en air interne de l'alimentation en air comprend au moins une ouverture de sortie (25) fournissant de l'air dans la chambre de combustion positionnée autour de l'au moins une ouverture de sortie du premier conduit d'alimentation en gaz ;
l'au moins une ouverture de sortie (20) du premier conduit d'alimentation en gaz et l'au moins une ouverture de sortie (25) de la chambre d'alimentation en air interne fournissent toutes deux une entrée de la chambre de combustion.

8. Procédé permettant de faire fonctionner un brûleur à gaz de récupération (10) comprenant :
la fourniture de gaz de combustion à une chambre de combustion (11) à travers un premier conduit d'alimentation en gaz (14a) ;
la fourniture de gaz de combustion à une pointe de brûleur (12) par le biais d'un second conduit d'alimentation en gaz (14b) ;
la fourniture d'une alimentation en air pour l'air de combustion via une chambre d'alimentation en air interne (21a) ayant une première entrée (23) pour l'air de combustion, dans lequel la chambre d'alimentation en air interne est conçue pour fournir l'air de combustion à la chambre de combustion ;
le chauffage de l'air de combustion par un gaz d'échappement, dans lequel le gaz d'échappement comprend un canal d'écoulement de gaz d'échappement (22) ;
la fourniture de l'alimentation en air pour l'air de combustion via une chambre d'alimentation en air externe (21b) ayant une seconde entrée séparée (24) pour l'air de combustion, dans lequel la chambre d'alimentation en air externe est positionnée entre le canal d'écoulement des gaz d'échappement et la chambre d'alimentation en air interne conçue pour fournir l'air de combustion à la pointe du brûleur ;
le fonctionnement du brûleur à gaz de récupération dans un premier mode de fonctionnement lorsqu'une température de traitement à l'intérieur d'une chambre de traitement est inférieure à un seuil de température ;
le fonctionnement du brûleur à gaz de récupération dans un second mode de fonctionnement lorsque la température de traitement à l'intérieur de la chambre de traitement est supérieure au seuil de température, de préférence supérieure à la température d'auto-inflammation du gaz de combustion.

9. Procédé selon la revendication 8 dans lequel, lorsque le brûleur à gaz de récupération fonctionne selon le premier mode de fonctionnement :
le gaz de combustion est fourni à la chambre de combustion via le premier conduit d'alimentation en gaz ;
une première partie de l'air de combustion est fournie à la chambre de combustion via la chambre d'alimentation en air interne ; et
une seconde partie de l'air de combustion est fournie à la pointe de brûleur via la chambre d'alimentation en air externe.

10. Procédé selon la revendication 8, dans lequel, lorsque le brûleur à gaz de récupération fonctionne selon le second mode de fonctionnement :
le gaz de combustion est fourni à la pointe de brûleur via le second conduit d'alimentation en gaz ;
une majeure partie de l'air de combustion est fournie à la pointe de brûleur via la chambre d'alimentation en air externe, dans lequel la majeure partie du second mode est plus grande que la seconde partie du premier mode de fonctionnement, une partie mineure de l'air de combustion est fournie à la chambre de combustion via la chambre d'alimentation en air interne et la partie mineure du second mode est plus petite que la première partie du premier mode de fonctionnement.

11. Procédé selon la revendication 8, dans lequel, lorsque le brûleur à gaz de récupération fonctionne selon le second mode de fonctionnement :
le gaz de combustion est fourni à la pointe de brûleur via le second conduit d'alimentation en gaz ; et
l'air de combustion est fourni à la pointe de brûleur via la chambre d'alimentation en air externe.
